# EUROPEAN PATENT SPECIFICATION

(11) **EP 2 991 505 B1**
(45) Date of publication and mention of the grant of the patent: **21.07.2021**
(21) Application number: 14791506.0
(22) Date of filing: 01.05.2014
(51) Int. Cl.: A23J 3/14, A23K 10/37, A23K 20/147, A23K 50/40, A23K 50/80

(54) **PROTEIN ENRICHMENT**
PROTEINANREICHERUNG
ENRICHISSEMENT EN PROTÉINE

(30) Priority: 02.05.2013 US 201361818680 P
(43) Date of publication of application: 09.03.2016
(73) Proprietor: Cargill, Incorporated, Wayzata, MN 55391 (US)
(72) Inventor: HAHN, John Joseph, B-1150 Woluwe-St Pierre (BE); LERA CALVO, Concepcion, B-9000 Gent (BE); MURRU, Marcello, B-1030 Schaarbeek (BE)
(74) Representative: Elseviers, Myriam
(86) International application number: PCT/US2014/036374
(87) International publication number: WO 2014/179572

(56) References cited:
- WO-A1-2009/137934
- US-A- 3 402 165
- US-A- 4 083 836
- US-A1- 2004 146 628
- US-A1- 2006 057 251
- US-A1- 2012 253 015
- US-B1- 6 398 035
- US-B2- 8 048 463
- US-B2- 8 227 012
- A. Davin: "Fractionation of oleaginous seed meals by screening and characterization of the products", Plant Food Hum Nutr, vol. 33, no. 2 June 1983 (1983-06), pages 153-160, XP9192228, DOI: 10.1007/BF01091302 Retrieved from the Internet: URL:http://rd.springer.com/article/10.1007 /BF01091302 [retrieved on 2016-10-27]
- Anonymous: "Feed Processing", Swine Nutrtion Guide, 24 October 2009 (2009-10-24), pages 1-6, XP055313253, www.ncsu.edu/project/swine_extension/nutri tion/nutritionguide/feed manufacturing and bidding/feed.htm Retrieved from the Internet: URL:http://web.archive.org/web/20091024171 442/http://www.ncsu.edu/project/swine_exte nsion/nutrition/nutritionguide/feed manufacturing and bidding/feed.htm [retrieved on 2016-10-24]
- Food And Agriculture Organization Of The United Nations: "Chemical composition and nutritional value of maize" In: "Maize in human nutrition - Issue 25 of FAO food and nutrition series", 1 January 1992 (1992-01-01), Food & Agriculture Org., Rome, XP055313265, ISBN: 978-92-5-103013-4 pages 13-29, * tables 5, 8 *
- V Heuzé ET AL: "Sunflower meal - Feedipedia", Feedipedia.org, 14 June 2012 (2012-06-14), pages 1-6, XP055503243, http://www.feedipedia.org/node/732 Retrieved from the Internet: URL:https://web.archive.org/web/2013043006 1906/https://www.feedipedia.org/node/732 [retrieved on 2018-08-29]

## Description

### Field of the Invention

The present invention relates to a process for increasing the content of proteins in oilseeds meal from sunflower seeds.

### Background of the Invention

In the field of animal nutrition, it is well-known that the animals benefit from the protein content in oilseed meal.

EP 1 908 355 describes a process for the reduction of the fiber content in fiber-containing oilseeds such as rapeseed.

EP 2 123 178 relates to a method for producing high protein content rapeseed meal.

US 2006/0057251 relates to the production of highly digestible mid-level protein distillers dried grain with solubles.

US 2004/0146628 relates a method for preparing extraction meal from the seeds of sunflowers. The method involves the use of a strainer device and a windsifter.

US 4,083,836 describes the preparation of edible protein concentrate from seed selected from *Brassica* species.

Davin describes in Qual Plant Foods Human Nutrition 33, (1983) 153-160 the fractionation of oleaginous seed meals by screening and characterization of the products.

However, there is still a further need for a process that allows obtaining an increase of proteins in oilseed meals. The current invention provides such a process for increasing the protein content in oilseed meal from sunflower seeds.

### Summary of the Invention

The current invention relates to a process for increasing protein content of oilseed meal and said process is comprising the following steps:
a) Taking oilseed meal containing protein
b) Separating the oilseed meal with gravity separator containing a separating deck surface into a first fraction of oilseed meal having a protein content that is higher than the protein content of the oilseed meal of step a), and a second fraction of oilseed meal having a protein content that is lower than the protein content of the oilseed meal of step a),
c) Collecting the fraction of oilseed meal having a protein content that is higher than the protein content of the oilseed meal of step a),
wherein the oilseed is sunflower seed.

Also described herein is the oilseed meal obtainable according to the process of current invention and which is having a protein content from 39% to 48%, preferably from 40% to 47%, more preferably from 42% to 46%.

Further described herein is an animal feed containing the oilseed meal and suitable ingredients.

The current invention also relates to the use of gravity separator containing a separating deck surface for separating initial oilseed meal containing protein into at least two fractions wherein at least one fraction of oilseed meal is having a protein content that is higher than the protein content of the initial oilseed meal for at least 1%, preferably at least 5% up to 15%, or up to 20% and wherein the oilseed is sunflower seed.

### Detailed Description

The current invention relates to a process for increasing protein content of oilseed meal and said process is comprising the following steps:
a) Taking oilseed meal containing protein,
b) Separating the oilseed meal with gravity separator containing a separating deck surface into a first fraction of oilseed
   meal having a protein content that is higher than the protein content of the oilseed meal of step a), and a second fraction of oilseed meal having a protein content that is lower than the protein content of the oilseed meal of step a),
c) Collecting the fraction of oilseed meal having a protein content that is higher than the protein content of the oilseed meal of step a),
wherein the oilseed is sunflower seed.

### Oilseed meal containing protein

Oilseed meal containing protein refers to meal containing protein and selected from linseed, safflower, sesame, rapeseed (canola), castor, and sunflower. Preferably the oilseed meal is obtained from rapeseed or sunflower, more preferably from sunflower.

### Protein content

The protein content is measured according to Dumas method NF V 18-120 1997.

### Gravitation separator

Gravity separator is containing a separating deck surface in order to be able to provide a bed of material over the surface. In a gravity separator the movement of the deck and air pressure is used to move the light product up while allowing the heavy product to contact the deck and begins its movement to the high side of the table.

As an example, a suitable gravitation separator is described in US 6,398,035.

While the current process is described as a process for increasing the protein content of oilseed meal, it has to be understood that likewise the fiber content of this same fraction is reduced.

Furthermore, the oilseed meal having a protein content lower than the protein content of the oilseed meal of the stating material, has an increased content of fiber.

The current invention further relates to a process for increasing protein content of oilseed meal and said process is comprising the following steps:
a) Taking oilseed meal containing protein,
b) Separating the oilseed meal with gravity separator containing a separating deck surface into a first fraction of oilseed meal having a protein content that is higher than the protein content of the oilseed meal of step a), and a second fraction of oilseed meal having a protein content that is lower than the protein content of the oilseed meal of step a),
c) Collecting the fraction of oilseed meal having a protein content that is higher than the protein content of the oilseed meal of step a), and
wherein between step a) and b) the oilseed meal is sieved and the fraction that is remaining on the sieve is brought in step b) onto the gravity separator,
wherein the oilseed is sunflower seed.

### Sieve

Sieving is a technique that allows separating particles of different sizes. Depending upon the types of particles to be separated, sieves with different types of holes or opening (pore or hole) size can be applied. Any type of sieve can be suitable, for example screen sieves can be applied. In the process of the current invention, the sieving may be using at least one sieve with an opening size bigger than 1 mm. Furthermore the sieving is preferably using at least one sieve with opening size from 600 µm to 1 mm. Finally more preferably, the current invention is using at least one sieve with an opening size from 250 µm to 600 µm.

The current invention further relates to a process for increasing protein content of oilseed meal and said process is comprising the following steps:
a) Taking oilseed meal containing protein,
b) Separating the oilseed meal with gravity separator containing a separating deck surface into a first fraction of oilseed
   meal having a protein content that is higher than the protein content of the oilseed meal of step a), and a second fraction of oilseed meal having a protein content that is lower than the protein content of the oilseed meal of step a),
c) Collecting the fraction of oilseed meal having a protein content that is higher than the protein content of the oilseed meal of step a), and
wherein between step a) and b) the oilseed meal is sieved and the fraction that is remaining on the sieve is brought in step b) onto the gravity separator,
wherein the oilseed is sunflower seed.

Also described herein is a process wherein the oilseed meal is milled with a hammer mill fitted with a 2 mm screen. This milling allows crushing the big lumps and making the oilseed meal better processable and avoiding milling the hulls. The average particle size is between 0.01 and 1 mm. the person skilled in the art knows that other types of mill are likewise suitable for this process step, for example a further suitable mill can be a disc mill, a roller mill and any other suitable mill.

Further described herein is a process for increasing protein content of oilseed meal and said process is comprising the following steps:
a) Taking oilseed meal containing protein,
b) Separating the oilseed meal with gravity separator into a first fraction of oilseed meal having a protein content that is higher than the protein content of the oilseed meal of step a), and a second fraction of oilseed meal having a protein content that is lower than the protein content of the oilseed meal of step a),
c) Collecting the fraction of oilseed meal having a protein content that is higher than the protein content of the oilseed meal of step a), and
wherein between step a) and b) the oilseed containing protein is sieved and the fraction that is remaining on the sieve is brought in step b) onto the gravity separator, and wherein the oilseed meal of step c) is combined with the oilseed meal that passed through the sieve between step a) and b).

The current invention further relates to a process for increasing protein content of oilseed meal and said process is comprising the following steps:
a) Taking oilseed meal containing protein,
b) Sieving the oilseed meal containing protein with a sieve having an opening size of from 200 µm to 1000 µm and obtaining a fraction that passes through the sieve (fine fraction) and a fraction that remains on the sieve (coarse fraction),
c) Separating the oilseed meal that remains on the sieve of step b), with gravity separator containing a separating deck surface into a first fraction of oilseed meal having a protein content that is higher than the protein content of the oilseed meal of step a), and a second fraction of oilseed meal having a protein content that is lower than the protein content of the oilseed meal of step a),
d) Collecting the fraction of oilseed meal having a protein content that is higher than the protein content of the oilseed meal of step a), and
e) Combining the oilseed meal of step d) with the oilseed meal that passed through the sieve of step b),
wherein the oilseed is sunflower seed.

The current invention further relates to a process for increasing protein content of oilseed meal and said process is comprising the following steps:
a) Taking oilseed meal containing protein that is a residue from the oil extraction from oilseeds,
b) Milling the oilseed meal with a hammer mill fitted with a 2 mm screen,
c) Sieving the oilseed meal containing protein with a sieve having an opening size of from 200 µm to 1000 µm and obtaining a fraction that passes through the sieve (fine fraction) and a fraction that remains on the sieve (coarse fraction),
d) Separating the oilseed meal that remains on the sieve of step b), with gravity separator containing a separating deck surface into a first fraction of oilseed meal having a protein content that is higher than the protein content of the oilseed meal of step a), and a second fraction of oilseed meal having a protein content that is lower than the protein content of the oilseed meal of step a),
e) Collecting the fraction of oilseed meal having a protein content that is higher than the protein content of the oilseed meal of step a), and
f) Combining the oilseed meal of step e) with the oilseed meal that passed through the sieve of step c),
wherein the oilseed is sunflower seed.

The current invention further relates to the process of the invention wherein the oilseed meal of step a) is the residue from the oil extraction from oilseeds. These residues typically have a bulk density of 0.54 to 0.55 g/ml. In the present invention, the oilseed meal is sunflower meal.

Also disclosed herein is the product obtainable by the process of the current invention. More specifically, the disclosure relates to the oilseed meal obtainable according to the process of current invention and wherein the oilseed is having a protein content from 39% to 48%, preferably from 40% to 47%, more preferably from 42% to 46%. Oilseed meal obtainable according to the process of the current invention can contain 43%, 44% or 45% protein. This oilseed meal further can have an average particle size from 300 µm to 1500 µm, from 400 µm to 1000 µm, preferably from 300 µm to 600 µm. The remaining fibre content is below 10%, preferably below 5%. The moisture content is below 15%, preferably below 13%, below 10% or below 8%. Furthermore, the moisture content may be around 12%. The oilseed meal of the current disclosure has a bulk density of from 0.60 to 0.75 g/ml, preferably from 0.62 to 0.70. Usually, the starting oilseed meal is having a bulk density of about 0.54-0.55 g/ml and by the applying the process of the current invention, an oilseed meal with a bulk density of 0.60 to 0.75g/ml is obtained. In the present invention, the oilseed meal is sunflower meal.

Surprisingly it was found that when the oilseed meal of step d) of the current process was combined with the oilseed meal that passed through the sieve of step b), the final oilseed meal had a bulk density that was higher than the bulk density of the oilseed meal collected in step d). For instance an oilseed meal collected in step d) and having a bulk density of 0.65 g/ml, easily results, after the combination with the fines of step b), in an oilseed meal having a bulk density of 0.68 g/ml.

In the more specific processes wherein the oilseed meal having a higher protein content than the protein content of the starting material, is combined with the fraction that passes through the sieve (=fine fraction), the oilseed meal is having a protein content from 39% to 48%, preferably from 40% to 47%, more preferably from 42% to 46% and an average particle size from 0.01 to 1 mm.

Further disclosed herein is an animal feed containing the oilseed meal and suitable ingredients. Preferably, the animal feed is petfood or aquafeed.

### Animal feed

Animal feed can be feed suitable for companion animals and other types of animals such as chickens, turkeys, game birds (e.g. pheasants, grouse, partridges, ducks, geese, swans, doves, and pigeons), amphibians (for example, frogs, salamander), reptiles, cattle (e.g., dairy or beef), fish, pigs, horses, sheep, goats, rodents, llamas, buffalo, wildlife (for example, deer, antelope, squirrels, bears, and rabbits), exotic animals (e.g. monkeys, snakes, and chinchillas), zoo animals (e.g. monkeys, antelope, giraffe, elephants, cats, and bears, amphibians, crustaceans, and mollusks).

### Petfood

The oilseed meal described herein can be used in a feed product for consumption by a companion animal. Companion animals include, without limitation, dogs, cats, birds, fish, potbelly pigs, rodents, horses, reptiles, and turtles. The feed product for consumption by a companion animal can be, for example, pet food or pet treats.

Feed for a companion animal can be a dry feed (e.g., normal protein or high protein formulations) or a moist or wet feed. Feed for a companion animal can include sauces and dressings to apply to or pour over a pet food as, for example, a palatant. Feed for a companion animal can be formulated for weight loss or for a nutritional benefit. In certain embodiments, feed for a companion animal is produced by passing through a forming or cooking extruder for processing into the feed and the product exhibits desirable pellet and/or kibble functionality. Similarly, the food can be moulded or formed.

The oilseed meal described herein can be added to or applied on an existing petfood, or can be used to replace other components of an animal feed such other protein containing materials. A typical inclusion level of the oilseed meal in petfood can vary from 0.1% to 30%, and generally is in the range of about 2% to about 15%.

### Aquafeed

Aquafeed is feed suitable for fish (e.g., farm- and coastal-raised carp, tilapia, salmon, walleye, trout, sea-bass or catfish), and crustaceans (include without limitation, shrimp, lobster, crabs, crayfish, and prawns), and mollusks (include without limitation snails, clams, oysters, squid, octopus and mussels).

The oilseed meal described herein can be added to or applied on an existing aquafeed, or can be used to replace other components of an animal feed such other protein containing materials. A typical inclusion level of the oilseed meal in aquafeed can vary from 0.1% to 30%, and generally is in the range of 2% to 15%.

Finally, the present invention relates to the use of gravity separator containing a separating deck surface for separating initial oilseed meal containing protein into at least two fractions wherein at least one fraction of oilseed meal is having a protein content that is at higher than the protein content of the initial oilseed meal for at least 1%, preferably at least 5% up to 15%, or up to 20% and wherein the oilseed is sunflower seed.

### Example

2Mt of de-oiled sunflower meal containing 38% proteins, having average particle size 2200 µm and a bulk density of 0.55 g/ml, was milled with a hammer mill equipped with a sieve with opening 2 mm.

The milled material was brought onto a sieve with opening of 250 µm and sieved to obtain a fine fraction <250µm and a coarse fraction >250µm with yields of 24.1% and 75.3% respectively.

1048 kg of coarse fraction of the sieved material was brought to the gravity separator (Model Cimbria GA 31).

The gravity separator had the following characteristics: - capacity 470 Kg/h; fan frequency 22.3Hz, Eccentric frequency 43.7Hz, longitudinal inclination 1.25° and transversal inclination 4.5°, table area 0.9m², air requirement 150m³:min⁻¹.

Dimensions - length 161.6 cm, width 121.4cm, height 114.0cm.

650.5 kg was collected as a high protein fraction of sunflower meal. It had a content of 46.9% protein (method NF V 18-120 1997), 9.4 crude fibres (Wende method) and an average particle size between 250µm and 1000µm. The moisture was 9.31 %w/w (oven 135°C for 2h).The bulk density is 0.65 g/ml.

## Claims

1. A process for increasing protein content of oilseed meal and said process is comprising the following steps:
a) Taking oilseed meal containing protein,
b) Separating the oilseed meal with gravity separator containing a separating deck surface into a first fraction of oilseed meal having a protein content that is higher than the protein content of the oilseed meal of step a), and a second fraction of oilseed meal having a protein content that is lower than the protein content of the oilseed meal of step a),
c) Collecting the fraction of oilseed meal having a protein content that is higher than the protein content of the oilseed meal of step a), wherein the oilseed is sunflower seed.

2. The process according to claim 1 wherein between step a) and b) the oilseed meal is sieved and the fraction that is remaining on the sieve is brought in step b) onto the gravity separator.

3. The process according to claim 2 wherein the sieving is using at least one sieve with an opening size bigger than 1 mm.

4. The process according to claim 2 or 3 wherein the sieving is using at least one sieve with opening size from 600 µm to 1 mm.

5. The process according to anyone of claims 2 to 4 wherein the sieving is using at least one sieve with an opening size from 250 µm to 600 µm.

6. The process according to anyone of claims 1 to 5 wherein the oilseed meal of step a) is the residue from the oil extraction from oilseeds.

7. The process according to claim 1 comprising the following steps:
a) Taking oilseed meal containing protein,
b) Sieving the oilseed meal containing protein with a sieve having an opening size of from 200 µm to 1000 µm and obtaining a fraction that passes through the sieve (fine fraction) and a fraction that remains on the sieve (coarse fraction),
c) Separating the oilseed meal that remains on the sieve of step b), with gravity separator containing a separating deck surface into a first fraction of oilseed meal having a protein content that is higher than the protein content of the oilseed meal of step a), and a second fraction of oilseed meal having a protein content that is lower than the protein content of the oilseed meal of step a),
d) Collecting the fraction of oilseed meal having a protein content that is higher than the protein content of the oilseed meal of step a), and
e) Combining the oilseed meal of step d) with the oilseed meal that passed through the sieve of step b),
wherein the oilseed is sunflower seed.

8. The process according to claim 1 comprising the following steps:
a) Taking oilseed meal containing protein that is a residue from the oil extraction from oilseeds,
b) Milling the oilseed meal with a hammer mill fitted with a 2 mm screen,
c) Sieving the oilseed meal containing protein with a sieve having an opening size of from 200 µm to 1000 µm and obtaining a fraction that passes through the sieve (fine fraction) and a fraction that remains on the sieve (coarse fraction),
d) Separating the oilseed meal that remains on the sieve of step b), with gravity separator containing a separating deck surface into a first fraction of oilseed meal having a protein content that is higher than the protein content of the oilseed meal of step a), and a second fraction of oilseed meal having a protein content that is lower than the protein content of the oilseed meal of step a),
e) Collecting the fraction of oilseed meal having a protein content that is higher than the protein content of the oilseed meal of step a), and
f) Combining the oilseed meal of step e) with the oilseed meal that passed through the sieve of step c),
wherein the oilseed is sunflower seed.

9. Use of gravity separator containing a separating deck surface for separating initial oilseed meal containing protein into at least two fractions wherein at least one fraction of oilseed meal is having a protein content that is at higher than the protein content of the initial oilseed meal for at least 1%, preferably at least 5% up to 15% or up to 20% and wherein the oilseed is sunflower seed.

## Patentansprüche

1. Verfahren zur Erhöhung des Proteingehalts von Ölsamenmehl, wobei das Verfahren die folgenden Schritte umfasst:
a) Hernehmen von proteinhaltigem Ölsamenmehl,
b) Trennen des Ölsamenmehls mit einem eine Deckfläche aufweisenden Schwerkraftabscheider in eine erste Fraktion Ölsamenmehl mit einem Proteingehalt, der höher als der Proteingehalt des Ölsamenmehls aus Schritt a) ist, und eine zweite Fraktion Ölsamenmehl mit einem Proteingehalt, der niedriger als der Proteingehalt des Ölsamenmehls aus Schritt a) ist,
c) Entnehmen der Fraktion Ölsamenmehl mit einem Proteingehalt, der höher als der Proteingehalt des Ölsamenmehls aus Schritt a) ist,
wobei es sich bei dem Ölsamen um Sonnenblumensamen handelt.

2. Verfahren nach Anspruch 1, wobei zwischen Schritt a) und b) das Ölsamenmehl gesiebt wird und die auf dem Sieb verbleibende Fraktion im Schritt b) auf den Schwerkraftabscheider aufgebracht wird.

3. Verfahren nach Anspruch 2, wobei das Sieben unter Verwendung mindestens eines Siebs mit einer Maschenweite von über 1 mm erfolgt.

4. Verfahren nach Anspruch 2 oder 3, wobei das Sieben unter Verwendung mindestens eines Siebs mit einer Maschenweite von 600 µm bis 1 mm erfolgt.

5. Verfahren nach einem der Ansprüche 2 bis 4, wobei das Sieben unter Verwendung mindestens eines Siebs mit einer Maschenweite von 250 µm bis 600 µm erfolgt.

6. Verfahren nach einem der Ansprüche 1 bis 5, wobei das Ölsamenmehl aus Schritt a) der Rückstand aus der Ölgewinnung aus Ölsamen ist.

7. Verfahren nach Anspruch 1, umfassend die folgenden Schritte:
a) Hernehmen von proteinhaltigem Ölsamenmehl,
b) Sieben des proteinhaltigen Ölsamenmehls mit einem Sieb mit einer Maschenweite von 200 µm bis 1000 µm und Erhalten einer das Sieb passierenden Fraktion (Feinfraktion) und einer auf dem Sieb verbleibenden Fraktion (Grobfraktion),
c) Trennen des auf dem Sieb verbleibenden Ölsamenmehls aus Schritt b) mit einem eine Deckfläche aufweisenden Schwerkraftabscheider in eine erste Fraktion Ölsamenmehl mit einem Proteingehalt, der höher als der Proteingehalt des Ölsamenmehls aus Schritt a) ist, und eine zweite Fraktion Ölsamenmehl mit einem Proteingehalt, der niedriger als der Proteingehalt des Ölsamenmehls aus Schritt a) ist,
d) Entnehmen der Fraktion Ölsamenmehl mit einem Proteingehalt, der höher als der Proteingehalt des Ölsamenmehls aus Schritt a) ist, und
e) Kombinieren des Ölsamenmehls aus Schritt d) mit dem Ölsamenmehl, das das Sieb passiert hat, aus Schritt b),
wobei es sich bei dem Ölsamen um Sonnenblumensamen handelt.

8. Verfahren nach Anspruch 1, umfassend die folgenden Schritte:
a) Hernehmen von proteinhaltigem Ölsamenmehl, das ein Rückstand aus der Ölgewinnung aus Ölsamen ist,
b) Mahlen des Ölsamenmehls mit einer mit einem 2-mm-Sieb ausgestatteten Hammermühle,
c) Sieben des proteinhaltigen Ölsamenmehls mit einem Sieb mit einer Maschenweite von 200 µm bis 1000 µm und Erhalten einer das Sieb passierenden Fraktion (Feinfraktion) und einer auf dem Sieb verbleibenden Fraktion (Grobfraktion),
d) Trennen des auf dem Sieb verbleibenden Ölsamenmehls aus Schritt b) mit einem eine Deckfläche aufweisenden Schwerkraftabscheider in eine erste Fraktion Ölsamenmehl mit einem Proteingehalt, der höher als der Proteingehalt des Ölsamenmehls aus Schritt a) ist, und eine zweite Fraktion Ölsamenmehl mit einem Proteingehalt, der niedriger als der Proteingehalt des Ölsamenmehls aus Schritt a) ist,
e) Entnehmen der Fraktion Ölsamenmehl mit einem Proteingehalt, der höher als der Proteingehalt des Ölsamenmehls aus Schritt a) ist, und
f) Kombinieren des Ölsamenmehls aus Schritt e) mit dem Ölsamenmehl, das das Sieb passiert hat, aus Schritt c),
wobei es sich bei dem Ölsamen um Sonnenblumensamen handelt.

9. Verwendung eines eine Deckfläche aufweisenden Schwerkraftabscheiders zum Trennen von proteinhaltigem Ölsamenausgangsmehl in mindestens zwei Fraktionen, wobei mindestens eine Fraktion Ölsamenmehl einen Proteingehalt aufweist, der mindestens 1 %, vorzugsweise mindestens 5 % bis 15 % oder bis zu 20 % über dem Proteingehalt des Ölsamenausgangsmehls liegt, und wobei es sich bei dem Ölsamen um Sonnenblumensamen handelt.

## Revendications

1. Procédé pour augmenter la teneur en protéines d'une farine oléagineuse et ledit procédé comprenant les étapes suivantes :
a) Prélèvement de farine oléagineuse contenant des protéines,
b) Séparation de la farine oléagineuse avec un séparateur gravitaire contenant une surface de pont de séparation en une première fraction de farine oléagineuse ayant une teneur en protéines qui est supérieure à la teneur en protéines de la farine oléagineuse de l'étape a), et une deuxième fraction de farine oléagineuse ayant une teneur en protéines qui est inférieure à la teneur en protéines de la farine oléagineuse de l'étape a).
c) Collecte de la fraction de farine oléagineuse ayant une teneur en protéines supérieure à la teneur en protéines de la farine oléagineuse de l'étape a),
dans laquelle la graine oléagineuse est une graine de tournesol.

2. Procédé selon la revendication 1, dans lequel entre l'étape a) et b) la farine oléagineuse est tamisée et la fraction qui est restante sur le tamis est amenée à l'étape b) sur le séparateur gravitaire.

3. Procédé selon la revendication 2, dans lequel le tamisage utilise au moins un tamis dont la taille d'ouverture est supérieure à 1 mm.

4. Procédé selon la revendication 2 ou 3, dans lequel le tamisage utilise au moins un tamis ayant une taille d'ouverture de 600 µm à 1 mm.

5. Procédé selon l'une quelconque des revendications 2 à 4, dans lequel le tamisage utilise au moins un tamis ayant une taille d'ouverture de 250 µm à 600 µm.

6. Procédé selon l'une quelconque des revendications 1 à 5, dans lequel la farine oléagineuse de l'étape a) est le résidu de l'extraction d'huile des graines oléagineuses.

7. Procédé selon la revendication 1 comprenant les étapes suivantes :
a) Prélèvement de farine oléagineuse contenant des protéines,
b) Tamisage de la farine oléagineuse contenant des protéines avec un tamis ayant une taille d'ouverture de 200 µm à 1000 µm et obtention d'une fraction qui passe à travers le tamis (fraction fine) et d'une fraction qui reste sur le tamis (fraction grossière),
c) Séparation de la farine oléagineuse qui reste sur le tamis de l'étape b), avec un séparateur gravitaire contenant une surface de pont de séparation en une première fraction de farine oléagineuse ayant une teneur en protéines qui est supérieure à la teneur en protéines de la farine oléagineuse de l'étape a), et une deuxième fraction de farine oléagineuse ayant une teneur en protéines qui est inférieure à la teneur en protéines de la farine oléagineuse de l'étape a),
d) Collecte de la fraction de farine oléagineuse ayant une teneur en protéines qui est supérieure à la teneur en protéines de la farine oléagineuse de l'étape a), et
e) Combinaison de la farine oléagineuse de l'étape d) avec la farine oléagineuse qui est passée à travers le tamis de l'étape b),
dans laquelle la graine oléagineuse est une graine de tournesol.

8. Procédé selon la revendication 1 comprenant les étapes suivantes :
a) Prélèvement d'une farine oléagineuse contenant des protéines qui est un résidu de l'extraction d'huile de graines oléagineuses,
b) Broyage de la farine oléagineuse avec un broyeur à marteaux muni d'un tamis de 2 mm,
c) Tamisage de la farine oléagineuse contenant des protéines avec un tamis ayant une taille d'ouverture de 200 µm à 1000 µm et obtention d'une fraction qui passe à travers le tamis (fraction fine) et d'une fraction qui reste sur le tamis (fraction grossière),
d) Séparation de la farine oléagineuse qui reste sur le tamis de l'étape b), avec un séparateur gravitaire contenant une surface de pont de séparation en une première fraction de farine oléagineuse ayant une teneur en protéines qui est supérieure à la teneur en protéines de la farine oléagineuse de l'étape a), et une deuxième fraction de farine oléagineuse ayant une teneur en protéines qui est inférieure à la teneur en protéines de la farine oléagineuse de l'étape a),
e) Collecte de la fraction de farine oléagineuse ayant une teneur en protéines qui est supérieure à la teneur en protéines de la farine oléagineuse de l'étape a), et
f) Combinaison de la farine oléagineuse de l'étape e) avec la farine oléagineuse qui est passée à travers le tamis de l'étape c),
dans laquelle la graine oléagineuse est une graine de tournesol.

9. Utilisation d'un séparateur gravitaire contenant une surface de pont de séparation destinée à séparer la farine oléagineuse initiale contenant des protéines en au moins deux fractions dans laquelle au moins une fraction de farine oléagineuse a une teneur en protéines qui est supérieure à la teneur en protéines de la farine oléagineuse initiale pour au moins 1 %, de préférence au moins 5 % jusqu'à 15 % ou jusqu'à 20 % et dans laquelle la graine oléagineuse est une graine de tournesol.
